# EUROPEAN PATENT APPLICATION

(11) **EP 4 468 465 A1**
(43) Date of publication of application: **27.11.2024**
(21) Application number: 23907556.7
(22) Date of filing: 12.12.2023
(51) Int. Cl.: H01M 10/6568, H01M 10/6556, H01M 10/643, H01M 10/613, H01M 10/6567, H01M 10/625

(54) **BATTERY PACK AND VEHICLE COMPRISING SAME**

(30) Priority: 22.12.2022 KR 20220181799; 27.06.2023 KR 20230082842
(71) Applicant: LG Energy Solution, Ltd., Seoul 07335 (KR)
(72) Inventor: BAEK, Seung-Ryul, Daejeon 34122 (KR)
(74) Representative: Plasseraud IP
(86) International application number: PCT/KR2023/020471
(87) International publication number: WO 2024/136270

(57) **Abstract**

The present disclosure discloses a battery pack with improved cooling performance.

A battery pack according to an aspect of the present disclosure may include: a plurality of battery modules including a plurality of battery cells and cooling tubes configured to cool the plurality of battery cells; a pack case providing an inner space to accommodate the plurality of battery modules therein; and a pipe assembly provided inside the pack case and configured to connect the cooling tubes of the plurality of battery modules on one side.

## Description

### TECHNICAL FIELD

The present disclosure relates to a battery pack and a vehicle including the same, and more specifically, it relates to a battery pack with improved cooling performance and a vehicle including the same.

The present application claims priority to Korean Patent Application No. 10-2022-0181799 filed on December 22, 2022 and Korean Patent Application No. 10-2023-0082842 filed on June 27, 2023 in the Republic of Korea, the disclosures of which are incorporated herein by reference.

### BACKGROUND ART

Secondary batteries, which are easy to apply depending on the product group and have electrical characteristics such as high energy density and the like, are generally used in electric vehicles (EVs) or hybrid electric vehicles (HEVs) that are driven by an electrical drive source, as well as in portable devices. These secondary batteries are attracting attention as a new energy source for improving eco-friendliness and energy efficiency in that they have the primary advantage of being able to dramatically reduce the use of fossil fuels and in that no by-product is generated due to energy use.

Types of current secondary batteries widely used include lithium-ion batteries, lithium-polymer batteries, nickel-cadmium batteries, nickel-hydrogen batteries, nickel-zinc batteries, and the like. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage and/or charge/discharge capacity.

Meanwhile, a common method for configuring a battery pack by connecting a plurality of battery cells in series/parallel is to preferentially configure a battery module including at least one battery cell and then add other elements using the at least one battery module, thereby configuring a battery pack or battery rack.

The battery pack above is configured such that battery modules including multiple battery cells are densely packed in a narrow space, and if multiple battery cells are densely packed in a narrow space, the temperature may increase as the battery cells continue to be used. For example, as the temperature inside the battery pack continues to increase, the performance of the battery pack may deteriorate, or the battery pack may explode, causing casualties.

### DISCLOSURE

### Technical Problem

The present disclosure has been designed to solve the problems of the related art, and therefore the present disclosure is directed to providing a battery pack with improved cooling performance by connecting a plurality of cooling tubes.

The present disclosure is also to provide a battery pack configured such that the structure thereof is easily changed to conform to the required cooling performance.

However, the technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery pack including: a plurality of battery modules including a plurality of battery cells and cooling tubes configured to cool the plurality of battery cells; a pack case providing an inner space to accommodate the plurality of battery modules therein; and a pipe assembly provided inside the pack case and configured to connect the cooling tubes of the plurality of battery modules on one side.

The pipe assembly may include: an in-module pipe configured to connect the cooling tubes inside each battery module; and an out-module pipe configured to connect adjacent cooling tubes between the plurality of battery modules.

The plurality of battery modules may include: the cooling tubes having at least a portion disposed between the plurality of battery cells in the longitudinal direction of the battery pack; and a plurality of side structure units configured to accommodate the cooling tubes and the plurality of battery cells.

In addition, the pipe assembly may be disposed, on one side of the pack case, in a space between the inner wall of the pack case and the plurality of side structure units.

The cooling tube may include: a main body provided between the plurality of battery cells; and a protrusion connected to the main body and protruding from at least one end of the main body.

In addition, the pipe assembly may connect the protrusions of the plurality of battery modules on one side.

The protrusion may have a plurality of ports configured to be connected to the pipe assembly by being inserted thereinto on both sides.

The in-module pipe may include: a pipe body configured to form a passage in an inner space; and a coupling portion provided on both sides of the pipe body and configured to be coupled to the port.

The coupling portion may have a plurality of ribs protruding from the outer surface.

A first gap-prevention member may be provided between the port and the pipe assembly, and the port may have a first groove configured to receive the first gap-prevention member.

The out-module pipe may be configured to be adjustable in its length.

The out-module pipe may be configured as a plurality of pipe members that are coupled to be slidable relative to each other.

A second gap-prevention member may be provided between the plurality of pipe members, and at least one of the plurality of pipe members coupled to each other may have a second groove configured to receive the second gap-prevention member.

The protrusion may include a cooling-fluid inlet/outlet portion provided in the inner space and in communication with the port.

In addition, the main body may include a cooling passage provided in the inner space and in communication with the cooling-fluid inlet/outlet portion.

The port may include: a first inlet and a second inlet, which are provided at positions corresponding to each other on both sides of the protrusion; and a first outlet and a second outlet, which are provided at positions, different from the inlet positions, corresponding to each other.

The cooling-fluid inlet/outlet portion may include: a first inlet/outlet portion in communication with the first inlet and the second inlet; and a second inlet/outlet portion in communication with the first outlet and the second outlet.

In addition, the cooling passage may include: a first passage in communication with the first inlet/outlet portion; and a second passage in communication with the second inlet/outlet portion;

A vehicle according to the present disclosure may include the battery pack according to the present disclosure.

### Advantageous Effects

According to one aspect of the present disclosure, the cooling performance of a battery pack can be improved by connecting a plurality of cooling tubes included in the battery pack using the pipe assembly. In addition, a single water injection system is applied to a single cooling system obtained by connecting a plurality of cooling tubes through the pipe assembly, instead of applying water injection systems to respective cooling tubes, thereby improving the cooling efficiency and space utilization of the battery pack.

According to another aspect of the present disclosure, when connecting a plurality of cooling tubes using the pipe assembly, it is possible to connect all cooling tubes using only two members, i.e., an in-module pipe used inside the battery module and an out-module pipe used between the battery modules. This can facilitate the assembly process and manufacturing process.

According to another aspect of the present disclosure, it is possible to prevent or reduce a gap resulting from component tolerances due to differences in manufacturing process between the components and/or assembly tolerances such as misalignment of the central axis or the like when connecting the pipe assembly and the cooling tube. In addition, it is possible to increase the bonding strength and waterproofing performance against cooling fluid when connecting the pipe assembly and the cooling tube.

According to another aspect of the present disclosure, the structure of the in-module pipe can be easily changed depending on a flow rate of cooling fluid required for the cooling performance of the battery pack. In addition, as described above, by providing the first gap-prevention member between the port and the coupling portion, the corresponding portion can be made thicker to prevent deformation due to the repulsive force of the first gap-prevention member. In addition, the structure of the in-module pipe can be changed such that the inner diameter of the port and the inner diameter of the pipe body are approximately the same, even if the port and the coupling portion are coupled to each other, thereby minimizing the friction caused by the flow of cooling fluid when the cooling fluid passes through the boundary between the coupling portion and the pipe body.

According to another aspect of the present disclosure, it is possible to prevent or reduce a gap resulting from component tolerances due to differences in manufacturing process between the components and/or assembly tolerances such as misalignment of the central axis or the like when connecting the out-module pipe and the port. In addition, it is possible to increase the bonding strength and waterproofing performance against cooling fluid when connecting the out-module pipe and the port. The out-module pipe can easily slide to adjust the length thereof through the second gap-prevention member, which has a smaller friction coefficient against one pipe than the friction coefficient between one pipe and the other pipe.

### DESCRIPTION OF DRAWINGS

FIG. 1 is a diagram illustrating the appearance of a battery pack according to an embodiment of the present disclosure.
FIG. 2 is an exploded diagram of a battery pack according to an embodiment of the present disclosure.
FIG. 3 is a diagram illustrating a battery module included in a battery pack according to an embodiment of the present disclosure.
FIG. 4 is a diagram illustrating a battery pack in which some elements are separated according to an embodiment of the present disclosure.
FIG. 5 is an enlarged view of a partial area in FIG. 4.
FIG. 6 is a diagram illustrating the connection relationship between a battery module and a pipe assembly included in a battery pack according to an embodiment of the present disclosure.
FIG. 7 is an enlarged view of a partial area in FIG. 3.
FIG. 8 is a diagram illustrating a cooling tube included in a battery pack according to an embodiment of the present disclosure.
FIG. 9 is a diagram illustrating the flow of cooling fluid through a cooling tube included in a battery pack according to an embodiment of the present disclosure.
FIG. 10 is a diagram illustrating an in-module pipe included in a battery pack according to an embodiment of the present disclosure.
FIG. 11 is a diagram illustrating a cross-section of an in-module pipe included in a battery pack according to an embodiment of the present disclosure.
FIG. 12 is a diagram illustrating an in-module pipe included in a battery pack according to another embodiment of the present disclosure.
FIG. 13 is a diagram illustrating a cross-section of an in-module pipe included in a battery pack according to another embodiment of the present disclosure.
FIG. 14 is a diagram illustrating an in-module pipe included in a battery pack according to another embodiment of the present disclosure.
FIG. 15 is a diagram illustrating a cross-section of an in-module pipe included in a battery pack according to another embodiment of the present disclosure.
FIG. 16 is a diagram illustrating an out-module pipe included in a battery pack according to an embodiment of the present disclosure.
FIG. 17 is an exploded diagram of an out-module pipe included in a battery pack according to an embodiment of the present disclosure.
FIG. 18 is a diagram illustrating a sliding method of an out-module pipe included in a battery pack according to an embodiment of the present disclosure.
FIG. 19 is a diagram illustrating some elements of a battery pack according to an embodiment of the present disclosure.
FIGS. 20 to 22 are diagrams illustrating a connection process of an out-module pipe between adj acent battery modules included in a battery pack according to an embodiment of the present disclosure.
FIG. 23 is a diagram illustrating a vehicle according to an embodiment of the present disclosure.

### BEST MODE

Hereinafter, preferred embodiments of the present disclosure will be described in detail with reference to the accompanying drawings. The accompanying drawings illustrate a preferred embodiment of the present disclosure and, together with the detailed description of the invention, serve to provide further understanding of the technical idea of the present disclosure, and thus, the present disclosure is not construed as being limited to the drawings. The same reference numerals indicate the same elements. In addition, the thicknesses, ratios, and sizes of respective elements shown in the attached drawings are exaggerated for convenience of explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Although terms indicating directions such as upward and downward are used in this specification, it is obvious to those skilled in the art to which the present disclosure pertains that these terms are only for convenience of explanation and may vary depending on the location of the target object or the location of the observer.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

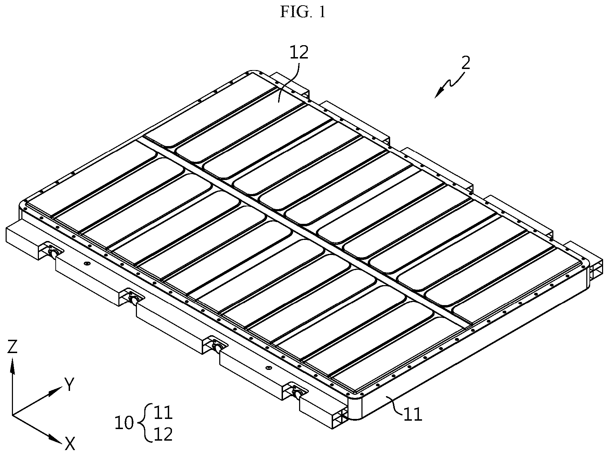

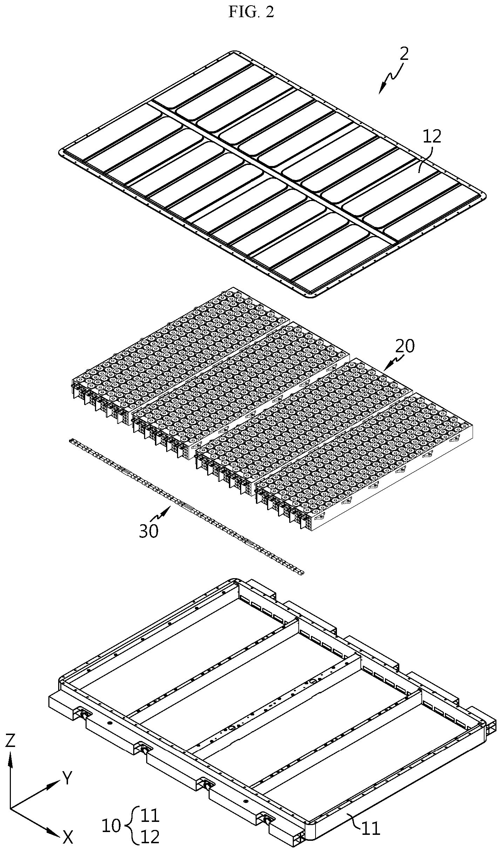

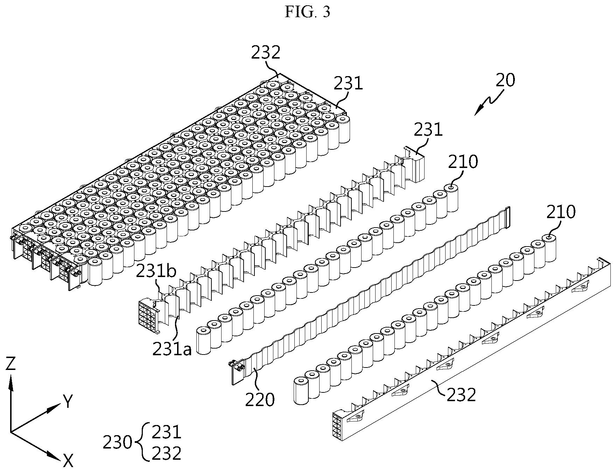

FIG. 1 is a diagram illustrating the appearance of a battery pack 2 according to an embodiment of the present disclosure. FIG. 2 is an exploded diagram of a battery pack 2 according to an embodiment of the present disclosure. FIG. 3 is a diagram illustrating a battery module 20 included in a battery pack 2 according to an embodiment of the present disclosure.

Referring to FIGS. 1 to 3, the battery pack 2 according to the present disclosure may include a plurality of battery modules 20, a pack case 10, and a pipe assembly 30.

Referring to FIG. 3, each of the plurality of battery modules 20 may include a plurality of battery cells 210 and a cooling tube 220.

Although the battery cell 210 is not shown in detail, a plurality of battery cells 210 may be provided. The battery cell 210 may indicate a secondary battery. The battery cell 210 may include an electrode assembly, an electrolyte, and a battery case that accommodates the electrode assembly and the electrolyte. The battery cell 210 may be, for example, a cylindrical secondary battery.

The cooling tube 220 may be configured to cool the plurality of battery cells 210. The cooling tube 220 may be configured to have an inner space in which cooling fluid flows. The cooling tube 220 may be provided around and/or between the plurality of battery cells 210.

The pack case 10 may provide an inner space. The pack case 10 may accommodate a plurality of battery modules 20 in the inner space. The pack case 10 may have a substantially cuboid shape. The pack case 10 may include a case body 11 and a pack cover 12. The case body 11 may be configured in the form of a box with an open top and may accommodate the plurality of battery modules 20 in the inner space. The pack cover 12 may be configured as a lid that covers the upper opening of the case body 11.

The pipe assembly 30 may be provided inside the pack case 10. The pipe assembly 30 may connect the cooling tubes 220 on at least one side. However, the pipe assembly 30 may also connect the cooling tubes 220, as well as on the one side, on the opposite side of the one side.

According to this configuration of the present disclosure, a plurality of cooling tubes 220 included in the battery pack 2 may be connected using the pipe assembly 30, thereby improving the cooling performance of the battery pack 2. In addition, a single water injection system may be applied to a single cooling system obtained by connecting a plurality of cooling tubes 220 through the pipe assembly 30, instead of applying water injection systems to respective cooling tubes 220, thereby improving the cooling efficiency and space utilization of the battery pack 2.

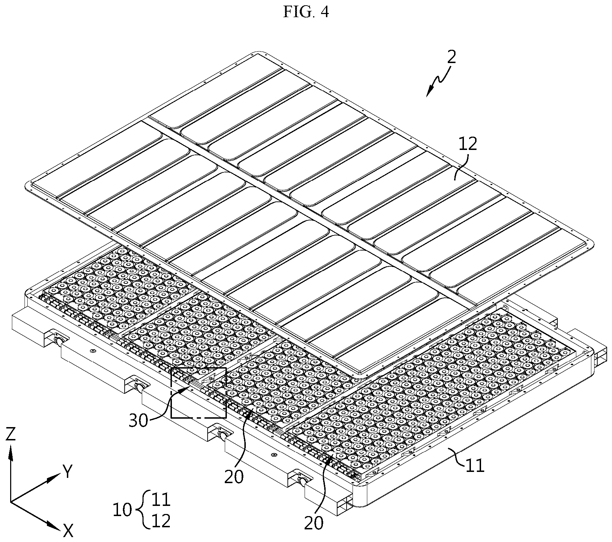

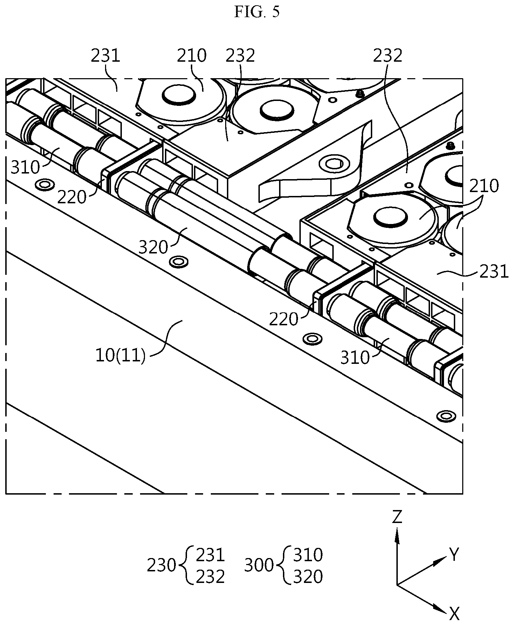

FIG. 4 is a diagram illustrating a battery pack 2 in which some elements are separated according to an embodiment of the present disclosure. FIG. 5 is an enlarged view of a partial area in FIG. 4.

Referring to FIGS. 4 and 5, the pipe assembly 30 may include an in-module pipe 310 and an out-module pipe 320.

The in-module pipe 310 may connect the cooling tubes 220 in each battery module 20. The in-module pipe 310 may connect adjacent cooling tubes 220 inside one battery module 20. The in-module pipe 310 may connect the cooling tubes 220 by making a passage in the inner space.

The out-module pipe 320 may connect adjacent cooling tubes 220 between a plurality of modules. The out-module pipe 320 may connect a pair of cooling tubes 220 adjacent to each other between a pair of battery modules 20 adjacent to each other. The out-module pipe 320 may connect the cooling tubes 220 by making a passage in the inner space.

According to this configuration of the present disclosure, when connecting a plurality of cooling tubes 220 using the pipe assembly 30, all the cooling tubes 220 may be connected using only two members, i.e., the in-module pipe 310 used inside the battery module 20 and the out-module pipe 320 used between the battery modules 20. This facilitates the assembly process and manufacturing process.

Referring back to FIG. 3, the battery module 20 may include a side structure unit 230.

The side structure unit 230 may be configured to accommodate the cooling tube 220 and a plurality of battery cells 210. The side structure unit 230 may include a main unit 231 and an end unit 232.

The main unit 231 may be formed to have a predetermined length in the longitudinal direction of the battery module 20. A plurality of main units 231 may be provided. The main unit 231 may accommodate a plurality of batteries in two rows in the width direction of the battery module 20. The main unit 231 may include a first battery accommodation portion 231a disposed on the first side of the main unit 231 so as to accommodate a plurality of batteries arranged in the longitudinal direction of the battery module 20, and a second battery accommodation portion 231b disposed on the second side of the main unit 231, which is the opposite side of the first battery accommodation portion 231a, so as to accommodate a plurality of batteries arranged in the longitudinal direction of the battery module 20.

The first battery accommodation portion 231a may be provided on the front face (directed in the +X-axis direction) of the main unit 231 along the longitudinal direction (the Y-axis direction) of the main unit 231. This first battery accommodation portion 231a may accommodate a plurality of battery cells 210 arranged in the longitudinal direction (the Y-axis direction) of the battery module 20. To this end, a plurality of first battery accommodation portions 231a may be provided on the front face (directed in the +X-axis direction) of the main unit 231.

The plurality of first battery accommodation portions 231a may be configured in a concave shape corresponding to the outer surface of the battery cell 210, respectively, and may at least partially surround the outer surface of the battery cell 210.

The second battery accommodation portion 231b may be provided on the rear face (directed in the -X-axis direction) of the main unit 231 along the longitudinal direction (the Y-axis direction) of the main unit 231. This second battery accommodation portion 231b may accommodate a plurality of battery cells 210 arranged in the longitudinal direction (the Y-axis direction) of the battery module 20. To this end, a plurality of second battery accommodation portion 231b may be provided on the rear face (directed the -X-axis direction) of the main unit 231.

The plurality of second battery accommodation portions 231b may be configured in a concave shape corresponding to the outer surface of the battery cell 210, respectively, and may at least partially surround the outer surface of the battery cell 210.

The plurality of second battery accommodation portions 231b and the plurality of first battery accommodation portions 231a may be disposed in a staggered pattern in the forward and backward directions (the X-axis direction) of the main unit 231 to accommodate as many battery cells 210, configured as cylindrical secondary batteries, as possible.

The pipe assembly 30 may be provided on one side of the pack case 10. Specifically, the pipe assembly 30 may be disposed in the space between the inner wall of the pack case 10 and a plurality of side structure units 230.

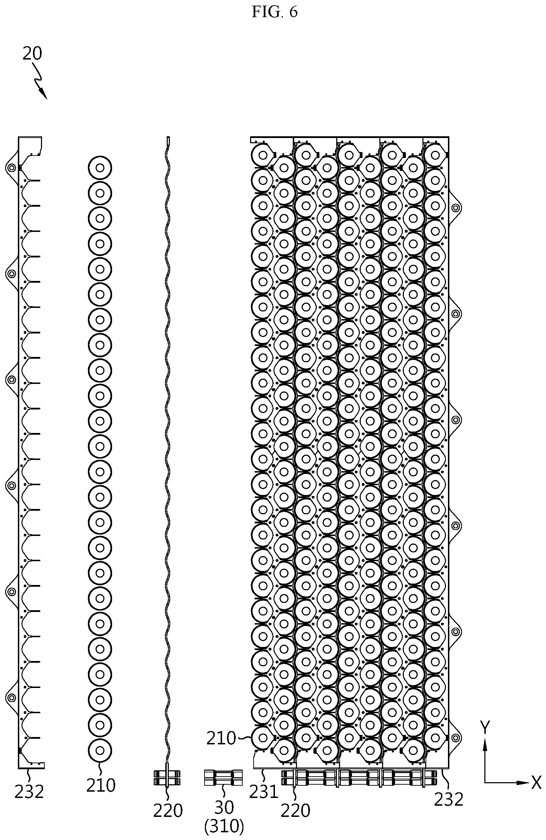

FIG. 6 is a diagram illustrating the connection relationship between a battery module 20 and a pipe assembly 30 included in a battery pack 2 according to an embodiment of the present disclosure.

Hereinafter, the coupling structure of the plurality of battery cells 210 and the cooling tubes 220 through the side structure units 230 will be described in more detail.

Referring to FIG. 6, the cooling tube 220 may be interposed between the battery cells 210 arranged in two rows, i.e., a front row and a rear row, along the width direction (the X-axis direction), among the plurality of battery cells 210. The side structure unit 230 may accommodate the battery cells 210 facing each other in the forward and backward directions (the X-axis direction) of the battery cells 210 between which the cooling tube 220 is interposed.

Specifically, an outermost end unit 232, a plurality of battery cells 210, a cooling tube 220, and a plurality of battery cells 210, and a main unit 231 may be arranged in the width direction (the X-axis direction) of the battery module 20, and then a plurality of battery cells 210, a cooling tube 220, a plurality of battery cells 210, and a main unit 231 may be arranged in sequence, and the adjacent cooling tubes 220 may be connected to each other by the pipe assembly 30. After that, an outermost end unit 232 may be disposed on the opposite side of the battery module 20 in the width direction (the X-axis direction), thereby completing the coupling of the side structure unit 230, so that the side structure unit 230 may accommodate the plurality of battery cells 210 and cooling tubes 220 therein.

According to this configuration of the present disclosure, since the connection between the cooling tubes 220 is simultaneously implemented through the pipe assembly 30 in units of battery modules 20 when the side structure unit 230, the plurality of battery cells 210, and the cooling tubes 220 are coupled, the connection process of the pipe assembly 30 may be further simplified, thereby reducing the assembly tap time of the pipe assembly 30 and significantly improving assembly quality.

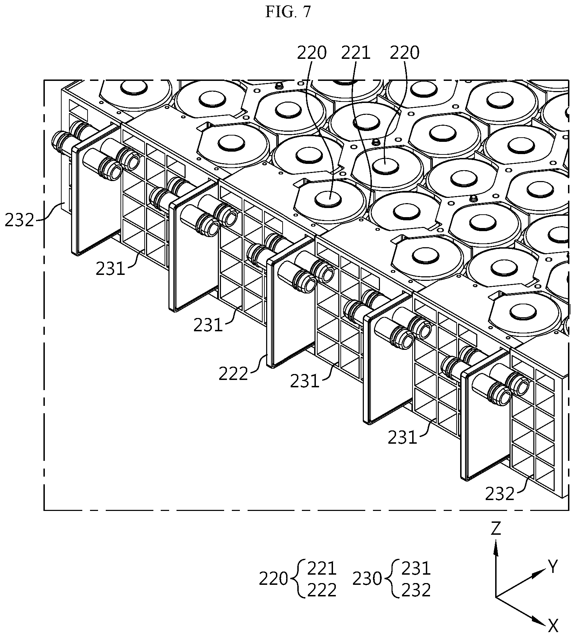

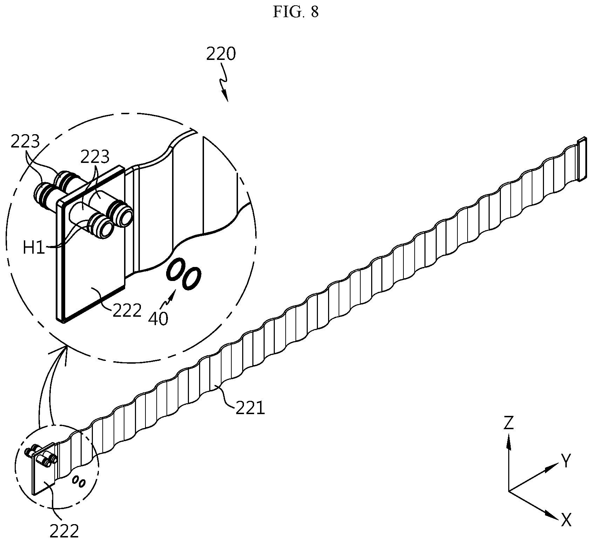

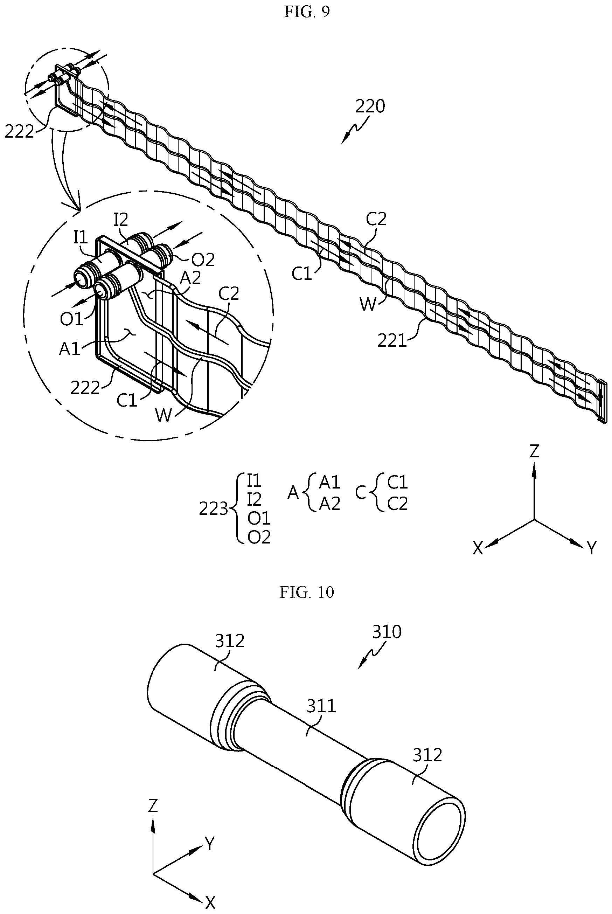

FIG. 7 is an enlarged view of a partial area in FIG. 3. FIG. 8 is a diagram illustrating a cooling tube 220 included in a battery pack 2 according to an embodiment of the present disclosure. FIG. 9 is a diagram illustrating the flow of cooling fluid through a cooling tube 220 included in a battery pack 2 according to an embodiment of the present disclosure.

Referring to FIGS. 7 to 9, the cooling tube 220 may include a main body 221 and a protrusion 222.

The main body 221 may be provided between a plurality of battery cells 210. The main body 221 may be provided between a pair of main units 231 adjacent to each other. The main body 221 may be provided between the main unit 231 and the end unit 232, which are adjacent to each other. The main body 221 may have an inner space and have a shape substantially corresponding to the outer surface of the plurality of battery cells 210 adjacent thereto.

The protrusion 222 may be connected to the main body 221 and may protrude from at least one end of the main body 221. The protrusion 222 may have an inner space and have a substantially cuboid shape. The protrusion 222 may be formed at the front in the longitudinal direction of the side structure. The protrusion 222 may be provided between the ends of a pair of main units 231 adjacent to each other. The protrusion 222 may be provided between one end of the main unit 231 and one end of the end unit 232, which are adjacent to each other.

Referring to FIG. 5 as well, the pipe assembly 30 may connect the protrusions 222 in one side. The pipe assembly 30 may connect the protrusions 222 at the front in the longitudinal direction (the Y-axis direction) of the side structure. The pipe assembly 30 may connect adjacent protrusions 222 on both sides of the protrusion 222.

According to this configuration of the present disclosure, the protrusions 222 are connected only on one side and there is no need to provide the protrusion 222 and a water injection system therefor on the other side, i.e., the opposite side of the one side, thereby increasing the energy density of the battery pack 2.

Referring back to FIG. 8, the protrusion 222 may have a plurality of ports 223. The battery pack 2 may have a first gap-prevention member 40.

The ports 223 may be provided on both sides of the protrusion 222. Two ports 223 may be provided on each side of the protrusion 222. The ports 223 may be configured to be inserted into and connected to the pipe assembly 30. Each port 223 may be configured in the form of a pipe protruding from one side of the protrusion 222. The port 223 may be configured in the form of a pipe having a diameter smaller than the diameter of the pipe assembly 30 into which the port 223 is inserted.

The first gap-prevention member 40 may be provided between the port 223 and the pipe assembly 30. The first gap-prevention member 40 may be an O-ring having a diameter substantially corresponding to the diameter of the port 223. The first gap-prevention member 40 may include a rubber member.

Referring back to FIG. 8, the port 223 may include a first groove H1.

The first groove H1 may be configured to receive the first gap-prevention member 40. The first groove H1 may be formed along the outer circumference of the port 223. The first groove H1 may be formed adjacent to the end of the port 223.

According to this configuration of the present disclosure, when the pipe assembly 30 and the cooling tube 220 are connected, it is possible to prevent or reduce a gap resulting from component tolerances due to differences in manufacturing process between the components and/or assembly tolerances such as misalignment of the central axis or the like. In addition, it is possible to increase the bonding strength and waterproofing performance against cooling fluid when connecting the pipe assembly 30 and the cooling tube 220.

FIG. 9 is a diagram illustrating the flow of cooling fluid through a cooling tube 220 included in a battery pack 2 according to an embodiment of the present disclosure.

Referring to FIG. 9, the protrusion 222 may include a cooling-fluid inlet/outlet portion A. The main body 221 may include a cooling passage C.

The cooling-fluid inlet/outlet portion A may be provided in the inner space of the protrusion 222. The cooling-fluid inlet/outlet portion A may be in communication with the port 223.

The cooling passage C may be provided in the inner space of the main body 221. The cooling passage C may be in communication with the cooling-fluid inlet/outlet portion A.

According to this configuration of the present disclosure, the cooling fluid introduced through the port 223 may pass through the cooling-fluid inlet/outlet portion A to flow to the cooling passage C, and then exit through the port 223, thereby cooling the battery cells 210 adjacent to the cooling tube 220. A more detailed cooling process will be described below with reference to FIG. 9.

The port 223 may include a first inlet I1, a second inlet I2, a first outlet O1, and a second outlet 02. The first inlet I1 and the second inlet I2 may be provided at positions corresponding to each other on both sides of the protrusion 222. The first outlet O1 and the second outlet O2 may be provided at positions, different from the above inlet positions, corresponding to each other on both sides of the protrusion 222. Based on the longitudinal direction of the battery module 20, the first inlet I1 and the second inlet I2 may be provided outward from the first outlet O1 and the second outlet O2.

The cooling-fluid inlet/outlet portion A may include a first inlet/outlet portion A1 and a second inlet/outlet portion A2. The first inlet/outlet portion A1 may be in communication with the first inlet I1 and the second inlet I2. The second inlet/outlet portion A2 may be in communication with the first outlet O1 and the second outlet O2. The first inlet/outlet portion A1 and the second inlet/outlet portion A2 may not be in direct communication with each other. The first inlet/outlet portion A1 and the second inlet/outlet portion A2 may be in indirect communication with each other through a cooling passage C.

The cooling passage C may include a first passage C1 and a second passage C2. The first passage C1 may be in communication with the first inlet/outlet portion A1. The second passage C2 may be in communication with the second inlet/outlet portion A2. The first passage C1 and the second passage C2 may communicate with each other at the end opposite the protrusion 222. The main body 221 may have a partition W approximately at the center in the X-axis direction in order to separate the first passage C1 and the second passage C2 from each other.

According to this configuration of the present disclosure, the cooling fluid is introduced through the first inlet I1, and some of the introduced cooling fluid flows to the second inlet I2 and enters an adjacent cooling tube 220 through the pipe assembly 30, and the remaining cooling fluid collects in the first inlet/outlet portion A1. The cooling fluid collected in the first inlet/outlet portion A1 flows to the opposite side of the first inlet/outlet portion A1 along the first passage C1, thereby cooling the battery cells 210 located around the cooling tube 220. The cooling fluid flowing through the first passage C1 flows back in the opposite direction along the second passage C2, thereby cooling the battery cells 210 located around the cooling tube 220 as well. The cooling fluid flowing through the second passage C2 collects in the second inlet/outlet portion A2. The cooling fluid collected in the second inlet/outlet portion A2 exits through the first outlet O1 along with the cooling fluid flowing from the adjacent cooling tube 220 to the second outlet O2 through the pipe assembly 30. In order to force the flow of the cooling fluid, one-way valves may be provided in the first inlet I1, the second inlet I2, the first outlet O1, and the second outlet O2.

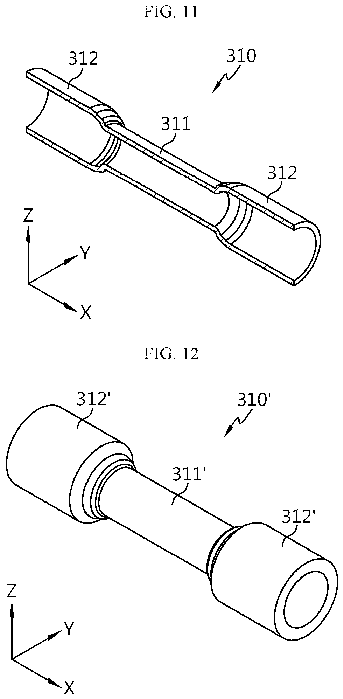

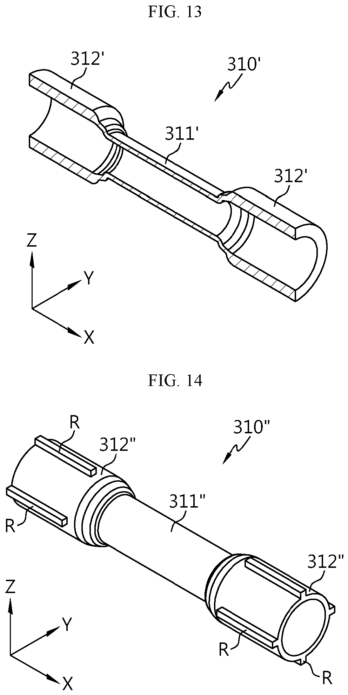

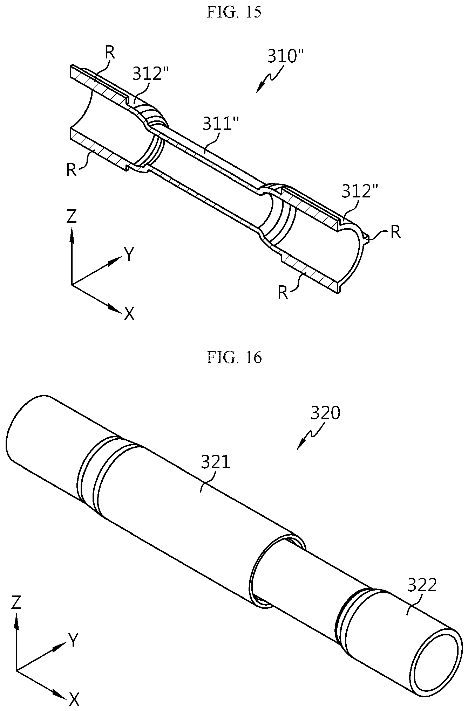

FIG. 10 is a diagram illustrating an in-module pipe 310 included in a battery pack 2 according to an embodiment of the present disclosure. FIG. 11 is a diagram illustrating a cross-section of an in-module pipe 310 included in a battery pack 2 according to an embodiment of the present disclosure. FIG. 12 is a diagram illustrating an in-module pipe 310 included in a battery pack 2 according to another embodiment of the present disclosure. FIG. 13 is a diagram illustrating a cross-section of an in-module pipe 310 included in a battery pack 2 according to another embodiment of the present disclosure. FIG. 14 is a diagram illustrating an in-module pipe 310 included in a battery pack 2 according to another embodiment of the present disclosure. FIG. 15 is a diagram illustrating a cross-section of an in-module pipe 310 included in a battery pack 2 according to another embodiment of the present disclosure.

Referring to FIGS. 10 to 16, the in-module pipe 310 may include a pipe body 311 and a coupling portion 312.

The pipe body 311 may have a passage formed therein. The pipe body 311 may be provided substantially in the middle of the in-module pipe 310. The pipe body 311 may be substantially in the shape of a hollow cylinder. The inner diameter of the pipe body 311 may be approximately equal to the value obtained by subtracting the thickness of the port 223 from the inner diameter of the coupling portion 312.

The coupling portion 312 may be provided on both sides of the pipe body 311. The coupling portion 312 may be provided at both ends of the pipe body 311 in the X-axis direction. The coupling portion 312 may be configured to be coupled to the port 223. The coupling portion 312 may be configured such that the port 223 is inserted thereinto. The inner diameter of the coupling portion 312 may be approximately the same as the outer diameter of the port 223. The inner diameter of the coupling portion 312 may be approximately equal to the sum of the thickness of the port 223 and the inner diameter of the pipe body 311.

The in-module pipe 310 shown in FIGS. 12 and 13 has a different thickness of the coupling portion 312 from that of the in-module pipe 310 shown in FIGS. 10 and 11. The inner diameter and/or outer diameter of the coupling portion 312 may be produced differently depending on a flow rate of cooling fluid required for the cooling performance of the battery pack 2. The inner diameter and/or outer diameter of the pipe body 311 may also be adjusted corresponding thereto.

The in-module pipe 310 shown in FIGS. 14 and 15, unlike the in-module pipe 310 shown in FIGS. 10 to 13, has a plurality of ribs R in the coupling portion 312. The in-module pipe 310 may have a plurality of ribs R protruding from the outer surface of the coupling portion 312. The plurality of ribs R may be provided radially on the outer surface of the coupling portion 312. For example, as shown in FIG. 14, four ribs R may be provided on the outer surface of the coupling portion 312 radially at an interval of approximately 90 degrees. The coupling portion 312 may have the ribs R provided on the outer surface thereof to increase rigidity depending on a flow rate of cooling fluid required for the cooling performance of the battery pack 2.

According to this configuration of the present disclosure, the structure of the in-module pipe 310 may be easily modified depending on a flow rate of cooling fluid required for the cooling performance of the battery pack 2. In addition, as described above, in the case where the first gap-prevention member 40 is provided between the port 223 and the coupling portion 312, the thickness of the corresponding portion may be made thicker to prevent deformation due to the repulsive force of the first gap-prevention member 40. In addition, the structure of the in-module pipe 310 may be changed such that the inner diameter of the port 223 and the inner diameter of the pipe body 311 are substantially the same, even if the port 223 and the coupling portion 312 are coupled to each other, thereby minimizing the friction caused by the flow of cooling fluid when the cooling fluid passes through the boundary between the coupling portion 312 and the pipe body 311.

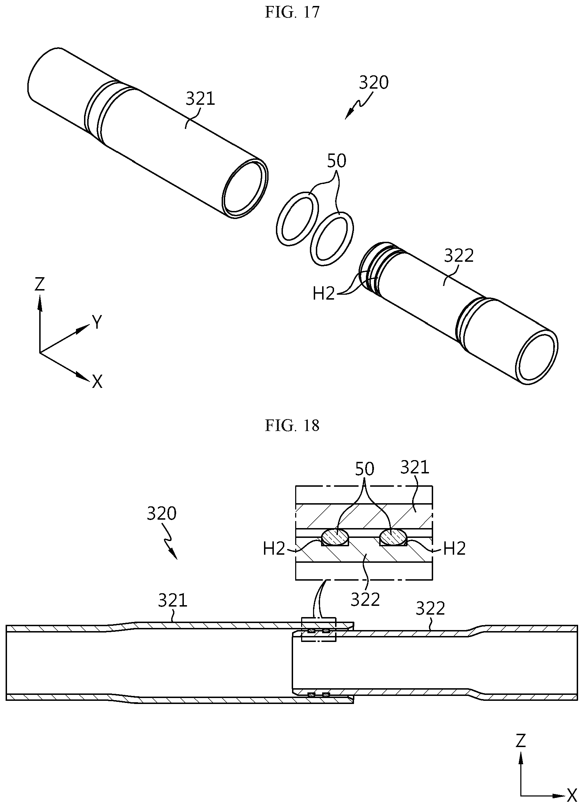

FIG. 16 is a diagram illustrating an out-module pipe 320 included in a battery pack 2 according to an embodiment of the present disclosure. FIG. 17 is an exploded diagram of an out-module pipe 320 included in a battery pack 2 according to an embodiment of the present disclosure. FIG. 18 is a diagram illustrating a sliding method of an out-module pipe 320 included in a battery pack 2 according to an embodiment of the present disclosure.

Referring to FIGS. 16 to 18, the out-module pipe 320 may be configured as a plurality of pipe members.

The out-module pipe 320 may be configured to be adjustable in its length. The plurality of pipe members may be coupled to be slidable relative to each other. For example, as shown in FIGS. 16 and 17, one pipe member 321 may be coupled to the other pipe member 322 to be slidable relative to each other by inserting the other pipe member 322 into one pipe member 321.

Referring to FIG. 5 as well, the other pipe member 322 may have a coupling portion 312 at the opposite end of the end to be inserted. The coupling portion 312 may be configured to be coupled to the port 223. The coupling portion 312 may be configured such that the port 223 is inserted into the same.

Referring back to FIGS. 16 and 17, a second gap-prevention member 50 may be provided between the plurality of pipe members. At least one of the plurality of pipe members coupled to each other may have a second groove H2 configured to receive the second gap-prevention member 50.

The second gap-prevention member 50 may be provided between one pipe member 321 and the other pipe member 322 to be inserted into the one pipe member 321. The second gap-prevention member 50 may be an O-ring having a diameter that substantially corresponds to the diameter of the other pipe member 322. The second gap-prevention member 50 may include a member having a friction coefficient against one pipe member 321, which is less than the friction coefficient between one pipe member 321 and the other pipe member 322.

The other pipe member 322 may be provided with a second groove H2. The second groove H2 may be configured to receive the second gap-prevention member 50. The second groove H2 may be formed on the outer circumference of the other pipe member 322. The second groove H2 may be formed adjacent to the end of the other pipe member 322.

A coupling portion 312 configured to be coupled to the port 223 may be provided at the ends of one pipe member 321 and the other pipe member 322.

According to this configuration of the present disclosure, it is possible to prevent or reduce a gap resulting from component tolerances due to differences in manufacturing process between the components and/or assembly tolerances such as misalignment of the central axis or the like when connecting the out-module pipe 320 and the port 223. In addition, it is possible to increase the bonding strength and waterproofing performance against cooling fluid when connecting the out-module pipe 320 and the port 223. The out-module pipe may easily slide to adjust the length thereof through the second gap-prevention member 50, which has a smaller friction coefficient against one pipe 321 than the friction coefficient between one pipe 321 and the other pipe 322.

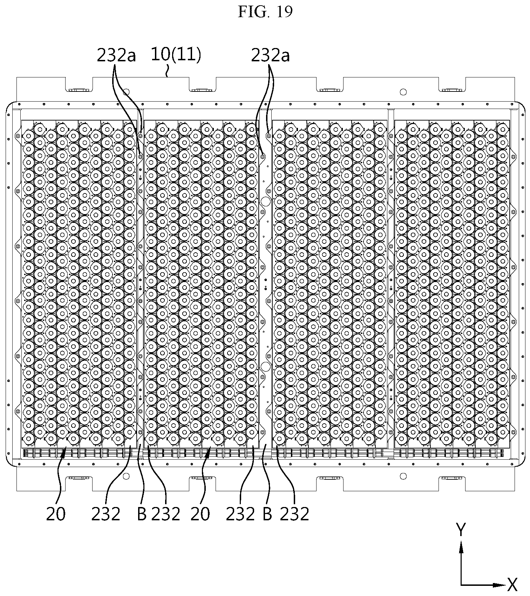

FIG. 19 is a diagram illustrating some elements of a battery pack 2 according to an embodiment of the present disclosure.

Referring to FIG. 19, the pack case 10 may be provided with a cross-beam B. The end unit 232 may be provided with a fixing portion 232a.

The cross-beam B may be provided between a pair of battery modules 20 adjacent to each other. The cross-beam B may partition a pair of battery modules 20 adjacent to each other. The cross-beam B may be a beam that protrudes a predetermined length from the inner surface of the pack case 10.

The fixing portion 232a may be configured to be coupled to the cross-beam B. The fixing portion 232a may have a hole through which a bolt is inserted so as to be coupled to the cross-beam B using a bolt. The fixing portions 232a of a pair of battery modules 20 adjacent to each other may be configured to be coupled to the cross-beams B in a staggered manner.

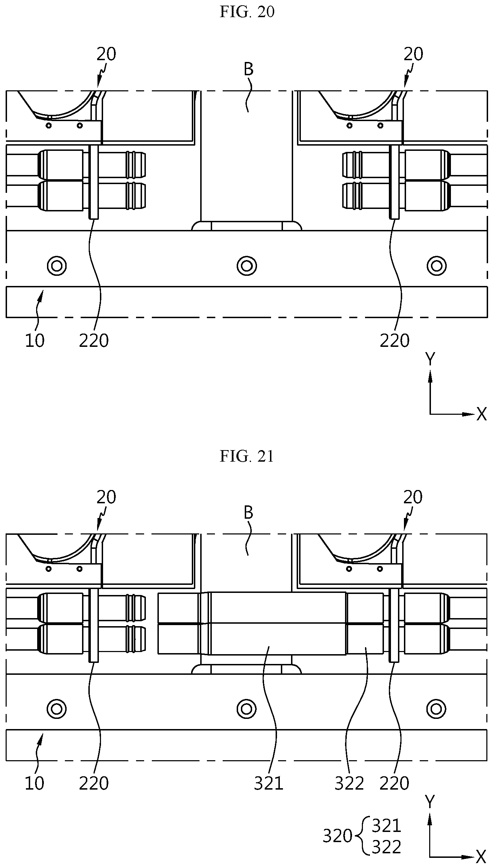

FIGS. 20 to 22 are diagrams illustrating a connection process of an out-module pipe 320 between adjacent battery modules 20 included in a battery pack 2 according to an embodiment of the present disclosure.

Referring to FIGS. 20 to 22, the assembly process of the battery pack 2 through the length-adjustable out-module pipe 320 will be described in detail.

FIG. 20 is a diagram illustrating the state before the out-module pipe 320 is connected between adjacent battery modules 20. Referring to FIG. 20, the battery module 20 may be produced and assembled in units of modules to be seated on the inner surface of the pack case 10. The battery modules 20 adjacent to each other may be accommodated in the pack case 10 with the cross-beam B interposed therebetween.

FIG. 21 is a diagram illustrating the state in which the out-module pipe 320 is connected to only one battery module 20 of the adjacent battery modules 20. The out-module pipe 320, having one pipe 321 and the other pipe 322 inserted by sliding into the one pipe 321 to shorten the entire length of the out-module pipe 320, may be connected to only one battery module 20.

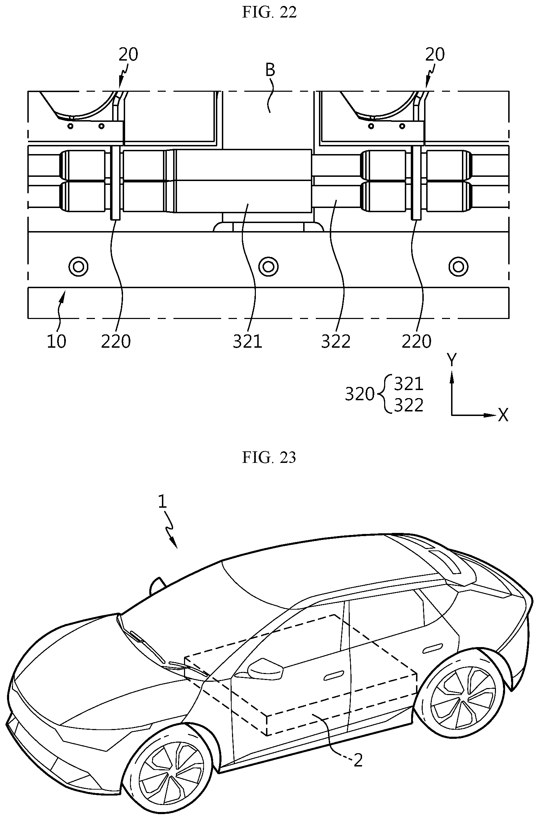

FIG. 22 is a diagram illustrating the state in which the out-module pipe is connected to both of the adjacent battery modules 20 therebetween. One pipe 321 of the out-module pipe 320, of which the entire length is increased from the state shown in FIG. 21 by sliding one pipe 321 toward the other battery module 20, may be connected the other battery module 20.

According to the above connection method, in manufacturing the battery pack 2, respective battery modules 20 may be preferentially stored in the pack case 10 and then the length-adjustable out-module pipe 320 may be connected thereto, instead of connecting all the battery modules 20 first and then storing the same in the pack case 10, thereby securing ease of assembly and stability. In addition, the out-module pipe 320 may be positioned on the cross-beam B to support the out-module pipe 320 by the cross-beam B.

FIG. 23 is a diagram illustrating a vehicle 1 according to an embodiment of the present disclosure.

Referring to FIG. 23, the vehicle 1 according to the present disclosure may include a battery pack 2. The vehicle 1 may be a hybrid vehicle 1 or an electric vehicle 1. The vehicle 1 according to the present disclosure may further include various other elements included in the vehicle 1, in addition to the battery pack 2. For example, the vehicle 1 according to the present disclosure may further include a car body, a motor, and control devices such as an ECU (electronic control unit) in addition to the battery pack 2 according to the present disclosure.

As described above, although the present disclosure has been described based on preferred embodiments with reference to the attached drawings, it is obvious to those skilled in the art that various and obvious modifications can be derived from this description without departing from the scope of the present disclosure. Accordingly, the scope of the present disclosure should be construed according to the claims described to include such variations.

## Claims

1. A battery pack comprising:
a plurality of battery modules comprising a plurality of battery cells and cooling tubes configured to cool the plurality of battery cells;
a pack case providing an inner space to accommodate the plurality of battery modules therein; and
a pipe assembly provided inside the pack case and configured to connect the cooling tubes of the plurality of battery modules on one side.

2. The battery pack according to claim 1,
wherein the pipe assembly comprises:
an in-module pipe configured to connect the cooling tubes inside each battery module; and
an out-module pipe configured to connect adjacent cooling tubes between the plurality of battery modules.

3. The battery pack according to claim 1,
wherein the plurality of battery modules comprises:
the cooling tubes having at least a portion disposed between the plurality of battery cells in the longitudinal direction of the battery pack; and
a plurality of side structure units configured to accommodate the cooling tubes and the plurality of battery cells, and
wherein the pipe assembly is disposed, on one side of the pack case, in a space between the inner wall of the pack case and the plurality of side structure units.

4. The battery pack according to claim 2,
wherein the cooling tube comprises:
a main body provided between the plurality of battery cells; and
a protrusion connected to the main body and protruding from at least one end of the main body, and
wherein the pipe assembly is configured to connect the protrusions of the plurality of battery modules on one side.

5. The battery pack according to claim 4,
wherein the protrusion has a plurality of ports configured to be connected to the pipe assembly by being inserted thereinto on both sides.

6. The battery pack according to claim 5,
wherein the in-module pipe comprises:
a pipe body configured to form a passage in an inner space; and
a coupling portion provided on both sides of the pipe body and configured to be coupled to the port.

7. The battery pack according to claim 6,
wherein the coupling portion has a plurality of ribs protruding from the outer surface.

8. The battery pack according to claim 6,
wherein a first gap-prevention member is provided between the port and the pipe assembly, and
wherein the port has a first groove configured to receive the first gap-prevention member.

9. The battery pack according to claim 2,
wherein the out-module pipe is configured to be adjustable in its length.

10. The battery pack according to claim 9
wherein the out-module pipe is configured as a plurality of pipe members that are coupled to be slidable relative to each other.

11. The battery pack according to claim 10,
wherein a second gap-prevention member is provided between the plurality of pipe members, and
wherein at least one of the plurality of pipe members coupled to each other has a second groove configured to receive the second gap-prevention member.

12. The battery pack according to claim 4,
wherein the protrusion comprises a cooling-fluid inlet/outlet portion provided in the inner space and in communication with the port, and
wherein the main body comprises a cooling passage provided in the inner space and in communication with the cooling-fluid inlet/outlet portion.

13. The battery pack according to claim 12,
wherein the port comprises: a first inlet and a second inlet, which are provided at positions corresponding to each other on both sides of the protrusion; and a first outlet and a second outlet, which are provided at positions, different from the inlet positions, corresponding to each other.

14. The battery pack according to claim 13,
wherein the cooling-fluid inlet/outlet portion comprises:
a first inlet/outlet portion in communication with the first inlet and the second inlet; and
a second inlet/outlet portion in communication with the first outlet and the second outlet, and
wherein the cooling passage comprises:
a first passage in communication with the first inlet/outlet portion; and
a second passage in communication with the second inlet/outlet portion;

15. A vehicle comprising the battery pack according to any one of claims 1 to 14.
